(19) Europäisches Patentamt
European Patent Office
Office européen des brevets

(11) EP 1 357 135 A1

(12) EUROPEAN PATENT APPLICATION

(43) Date of publication:
29.10.2003 Bulletin 2003/44

(51) Int Cl.7: C08F 10/02

(21) Application number: 02076658.0

(22) Date of filing: 26.04.2002

(84) Designated Contracting States:
AT BE CH CY DE DK ES FI FR GB GR IE IT LI LU MC NL PT SE TR
Designated Extension States:
AL LT LV MK RO SI

(71) Applicant: ATOFINA Research
7181 Seneffe (Feluy) (BE)

(72) Inventor: Maziers, Eric
7180 Seneffe (BE)

# (54) Rotomoulded articles with dimensional stability

(57) The present invention is concerned with rotomoulded articles having very low warpage and shrinkage and consisting essentially of polyethylene prepared with a bis-indenyl metallocene catalyst.

FIGURE 1.

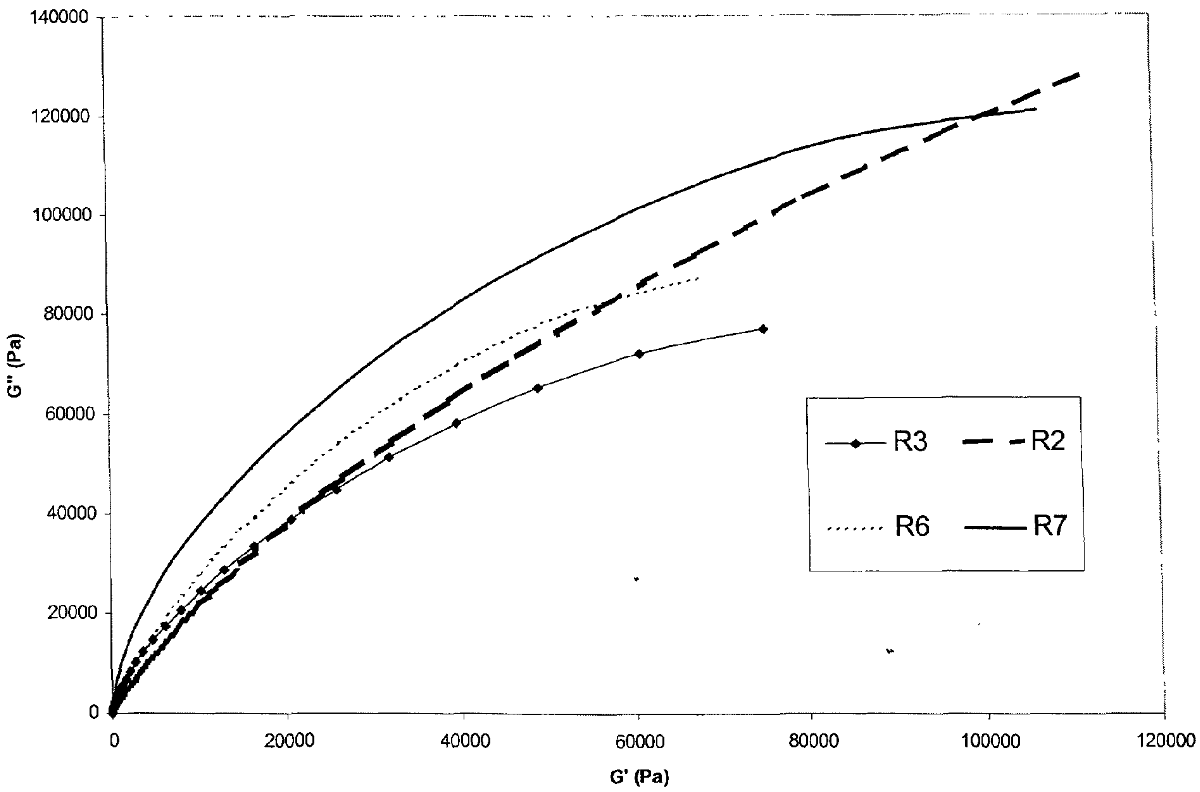


EP 1 357 135 A1

FIGURE 2.

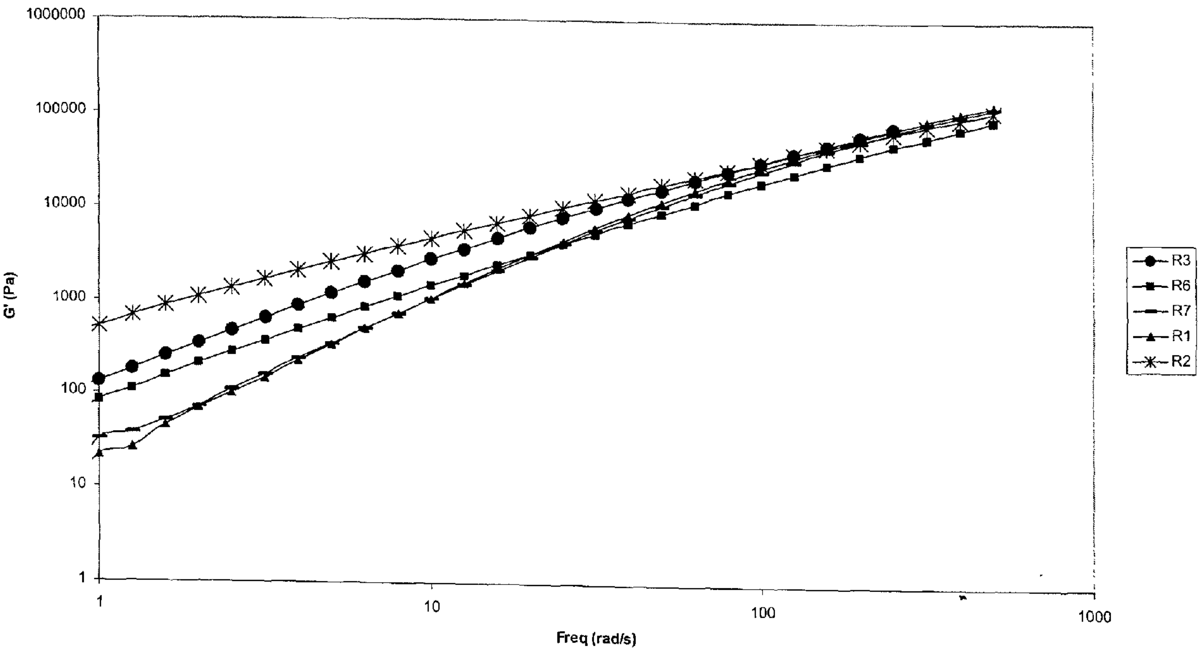
1000000
100000
10000
1000
100
10
1
G' (Pa)
1
10
100
1000
Freq (rad/s)
R3
R6
R7
R1
R2

## Description

This invention is concerned with rotomoulded articles having reduced shrinkage and warpage and prepared from polyethylene polymerised with a tetrahydro-indenyl catalyst.

Polyethylene represents more than 80 % of the polymers used in the rotomoulding market. This is due to the outstanding resistance of polyethylene to thermal degradation during processing, to its easy grinding, good flowability, and low temperature impact properties.

Rotomoulding is used for the manufacture of simple to complex, hollow plastic products. It can be used to mould a variety of materials such as polyethylene, polypropylene, polycarbonate or PVC. Linear low density polyethylene is preferably used as disclosed for example in "Some new results on rotational molding of metallocene polyethyles" by D. Annechini, E. Takacs and J. Vlachopoulos in ANTEC, vol. 1, 2001.

Polyethylenes prepared with a Ziegler-Natta catalyst are generally used in rotomoulding, but metallocene-produced polyethylenes are desirable, because their narrow molecular distribution allows better impact properties and shorter cycle time in processing.

The metallocene-produced polyethylenes of the prior art (see ANTEC, vol. 1, 2001) suffer from high shrinkage and warpage and for some applications.

Plastoelastomeric compositions such as described in US-5,457,159 can also be used in rotomoulding, but they require complex processing steps of mixing and vulcanisation.

US-6,124,400 discloses the use for rotomoulding of polymer alloys containing semi-crystalline polyolefin sequences with chains of different controlled microstructure prepared in a "one-pot" polymerisation process from a single monomer. The polymerization of these polymer alloys requires a complex catalyst system comprising organometallic catalyst precursors, cationic forming cocatalysts and cross-over agents.

There is thus a need for rotomoulded articles that do not suffer from these drawbacks.

It is an aim of the present invention to prepare rotomoulded articles with low shrinkage.

It is also an aim of the present invention to produce rotomoulded articles with very little warpage.

It is another aim of the present invention to prepare rotomoulded articles having impact strength and ease of processing.

Accordingly, the present invention discloses articles produced by rotomoulding and consisting essentially polyethylene (PE) polymerized with a bis-indenyl metallocene catalyst.

The high density polyethylene used in the present invention has a density ranging from 0.915 to 0.950 g/cm$^3$, preferably from 0.925 to 0.945 g/cm$^3$ and a melt flow index of from 2.0 to 20 g/10 min, preferably from 2.0 to 10 g/10 min.

In this specification, the density of the polyethylene is measured at 23 °C using the procedures of standard test ASTM D 1505.

The melt index MI2 is measured using the procedures of standard test ASTM D 1238 at 190 °C and under a load of 2.16 kg.

The metallocene used to prepare the high density polyethylene is a bis-indenyl represented by the general formula:

$$\text{I.} \qquad R''(Ind)_2MQ_2$$

wherein (Ind) is an indenyl or an hydrogenated indenyl, substituted or unsubstituted, R'' is a structural bridge between the two indenyls to impart stereorigidity that comprises a $C_1$-$C_4$ alkylene radical, a dialkyl germanium or silicon or siloxane, or a alkyl phosphine or amine radical, which bridge is substituted or unsubstituted; Q is a hydrocarbyl radical having from 1 to20 carbon atoms or a halogen, and M is a group IVb transition metal or Vanadium.

Each indenyl or hydrogenated indenyl compound may be substituted in the same way or differently from one another at one or more positions in the cyclopentadienyl ring, the cyclohexenyl ring and the bridge.

Each substituent may be independently chosen from those of formula $XR_v$ in which X is chosen from group IVA, oxygen and nitrogen and each R is the same or different and chosen from hydrogen or hydrocarbyl of from 1 to 20 carbon atoms and v+1 is the valence of X. X is preferably C. If the cyclopentadienyl ring is substituted, its substituent groups must be so bulky as to affect coordination of the olefin monomer to the metal M. Substituents on the cyclopentadienyl ring preferably have R as hydrogen or $CH_3$. More preferably, at least one and most preferably both cyclopentadienyl rings are unsubstituted.

In a particularly preferred embodiment, both indenyls are unsubstituted.

R'' is preferably a C1-C4 alkylene radical (as used herein to describe a difunctional radical, also called alkylidene), most preferably an ethylene bridge (as used herein to describe a difunctional radical, also called ethylidene), which is substituted or unsubstituted.

The metal M is preferably zirconium, hafnium, or titanium, most preferably zirconium.

Each Q is the same or different and may be a hydrocarbyl or hydrocarboxy radical having 1 to 20 carbon atoms or a halogen. Suitable hydrocarbyls include aryl, alkyl,alkenyl,alkylaryl or arylalkyl. Each Q is preferably halogen.
Among the preferred metallocenes used in the present invention, one can cite bis tetrahydro-indenyl compounds and bis indenyl compounds as disclosed for example in WO 96/35729. The most preferred metallocene catalyst is ethylene bis (4,5,6,7-tetrahydro-1-indenyl) zirconium dichloride.
The metallocene may be supported according to any method known in the art. In the event it is supported, the support used in the present invention can be any organic or inorganic solids, particularly porous supports such as talc, inorganic oxides, and resinous support material such as polyolefin. Preferably, the support material is an inorganic oxide in its finely divided form.
The addition on the support, of an agent that reacts with the support and has an ionising action, creates an active site.
Preferably, alumoxane is used to ionise the catalyst during the polymerization procedure, and any alumoxane known in the art is suitable.
The preferred alumoxanes comprise oligomeric linear and/or cyclic alkyl alumoxanes represented by the formula :

$$\text{(IV) } R\text{-}(\underset{\substack{|\\ R}}{Al}\text{-}O)_n\text{-}AlR_2 \text{ for oligomeric, linear alumoxanes}$$

And

$$\text{(V) } (\text{-}\underset{\substack{|\\ R}}{Al}\text{-}O\text{-})_m \text{ for oligomeric, cyclic alumoxanes,}$$

wherein n is 1-40, preferably 10-20, m is 3-40, preferably 3-20 and R is a $C_1$-$C_8$ alkyl group and preferably methyl. Methylalumoxane is preferably used.
One or more aluminiumalkyl(s) can be used as cocatalyst in the reactor. The aluminiumalkyl is represented by the formula $AlR_X$ can be used wherein each R is the same or different and is selected from halides or from alkoxy or alkyl groups having from 1 to 12 carbon atoms and x is from 1 to 3. Especially suitable aluminiumalkyl are trialkylaluminium, the most preferred being triisobutylaluminium (TIBAL).
Further, the catalyst may be prepolymerised prior to introducing it in the reaction zone and/or prior to the stabilization of the reaction conditions in the reactor.
The polymerisation of the metallocene-produced high density polyethylene can be carried out in gas, solution or slurry phase. Slurry polymerisation is preferably used to prepare the high density polyethylene. The polymerisation temperature ranges from 20 to 125°C, preferably from 60 to 95°C and the pressure ranges from 0.1 to 5.6 Mpa, preferably from 2 to 4 Mpa, for a time ranging from 10 minutes to 4 hours, preferably from 1 and 2.5 hours.
A continuous single loop reactor is preferably used for conducting the polymerisation under quasi steady state conditions.
The average molecular weight is controlled by adding hydrogen during polymerisation. The relative amounts of hydrogen and olefin introduced into the polymerisation reactor are from 0.001 to 15 mole percent hydrogen and from 99.999 to 85 mole percent olefin based on total hydrogen and olefin present, preferably from 0.2 to 3 mole percent hydrogen and from 99.8 to 97 mole percent olefin.
The density of the polyethylene is regulated by the amount of comonomer injected into the reactor; examples of comonomer which can be used include 1-olefins, typically C3 to C20 olefins among which propylene, butene, hexene, octene, 4-methyl-pentene are preferred, the most preferred being hexene.
The rotomoulding machine can be any one of the machines generally used in the field such as for example the CACCIA 1400R rotational moulding machine.
The rotomoulded polyethylene articles according to the present invention are characterised by very low warpage and shrinkage.
The polyethylene structure is mainly influenced by the catalytic system used for polymerisation and said structure is responsible for the properties of the final articles. It has been observed that a n-butyl catalyst produces a linear polyethylene resin with a narrow molecular weight distribution of about 2.5, that a Ziegler-Natta catalyst produces a linear polyethylene resin with a broader molecular weight distribution of the order of 5 and that a tetrahydro-indenyl

catalyst produces a polyethylene with a large amount of long chain branches and a narrow molecular weight distribution of the order of 2.5.

The molecular weight distribution (MWD) is completely defined by the polydispersity index D that is the ratio Mw/Mn of the weight average molecular weight (Mw) to the number average molecular weight (Mn).

The Dow Rheological Index (DRI) gives a measure of the amount of long chain branches. The lower the DRI value, the lower the amount of long chain branches. In the present invention the DRI is determined by fitting the Rheological Dynamic Analysis (RDA) curve of the HDPE by the Cross rheological model described here-below.

The dynamic rheology is measured using the method of the RDA. It is a measure of the resistance to flow of material placed between two parallel plates rotating with respect to each other with an oscillatory motion.

The apparatus comprises a motor that transmits a sinusoidal deformation to the sample. The sample then transmits the resulting constraint, said resulting constraint being also sinusoidal. The material to be studied can be a solid attached between two anchoring points or it can be melted between the two plates. The dynamic rheometer allows the simultaneous measurement of both the elastic modulus and the viscous modulus of the material. Indeed, the resulting sinusoidal constraint is displaced by a phase angle $\delta$ with respect to the imposed deformation and it is mathematically possible to decompose the resulting sinusoid into:

- a first sinusoid in phase with the initial deformation that represents the elastic component of the material. Said component conserves energy.
- a second sinusoid displaced by a phase angle of $\pi/2$ with respect to the initial deformation that represents the viscous component. Said component dissipates energy into heat.

The initial deformation is represented by the formula

$$\gamma = \gamma_0 \sin (\omega t)$$

wherein $\omega$ is the frequency.

The resulting constraint is thus of the form

$$\tau = \tau_0 \sin (\omega t+\delta)$$

The complex modulus is given by the formula

$$G = \tau/\gamma$$

The complex modulus can be decomposed into the elastic modulus G' and the viscous modulus G" defined respectively as

$$G' = G \cos (\delta)$$

and

$$G'' = G \sin(\delta)$$

The complex viscosity is defined as G / $\omega$.
At constant temperature and constant deformation amplitude, G' and G" can be measured for different values of $\omega$. The measurements were carried out under the following operating conditions:

- a constant operating temperature of 190 °C,
- parallel plates separated by 1.5 mm,
- maximum deformation maintained at 10%.

The elastic component G' and the viscous component G" can be graphed as a function of frequency $\omega$. The point of intersection between the elastic and viscous curves, called the cross-over point (COP), is characterised by a

frequency $\omega_c$ and a viscosity component $G_c$. The cross-over point is characteristic of each polymer and is a function of the molecular weight and of the molecular distribution.

To characterize the rheological behavior of substantially linear ethylene polymers, S. Lai and G.W. Knight have introduced ( ANTEC '93 Proceedings, Insite™ Technology Polyolefins (ITP)-New Rules in the Structure/Rheology Relationship of Ethylene &-Olefin Copolymers, New Orleans, La., May 1993) a new rheological measurement, the Dow Rheology Index (DRI) which expresses a polymer's "normalized elaxation time as the result of long chain branching". S.Lai et al; ( Antec '94, Dow Rheology Index (DRI) for Insite™ Technology Polyolefins (ITP): Unique structure-Processing Relationships, pp. 1814-1815) defined the DRI as the extent to which the rheology of ethylene-octene copolymers known as ITP ( Dow's Insite Technology Polyolefins) incorporating long chain branches into the polymer backbone deviates from the rheology of the conventional linear homogeneous polyolefins that are reported to have no Long Chain Branches (LCB) by the following normalized equation:

$$DRI = (365000.\ \lambda / \eta_0 - 1) / 10$$

wherein $\lambda$ is the characteristic relaxation time of the material and $\eta_0$ is the zero shear viscosity of the material. The DRI is calculated by least squares fit of the rheological curve (complex viscosity versus frequency) as described in US-6,114,486 with the following generalized Cross equation, i.e.

$$\eta = \eta_0 / (1 + (\gamma\ \lambda)^n)$$

wherein n is the power law index of the material, $\eta$ and $\gamma$ are the measured viscosity and shear rate data respectively. The dynamic rheological analysis was performed at 190°C and the strain amplitude was 10%. Results are reported according to ASTM D 4440. A low value of the Dow rheological index is indicative of low or inexistant Long Chain Branching (LCB). At equivalent molecular weight distribution, the content of LCB increases with increasing DRI. A value of DRI above one indicates a high level of LCB. It is also known that a high level of LCB is associated with a large elastic component as indicated by dynamic rheology.

The resins according to the present invention further have excellent flexural yield strength and flexural properties. They also have good impact strength both at room temperature and at low temperature Additionally, the production cycling time of the polyethylene resins produced with a bis-indenyl catalyst and preferably with a tetrahydro-indenyl catalyst is in line with that of other polyethylene resins.

It has further been observed that the rotomoulded articles prepared with the polyethylene according to the present invention offer a better resistance to degradation from nitric acid.

In yet another embodiment of the present invention, the rheological properties of the polyethylene produced with a tetrahydro-indenyl catalyst are used to prepare micro-pellets having an average size of from 300 to 800 microns in a one-step procedure: it is a result the fast decrease of the viscosity with increasing shear.

In yet a further embodiment of the present invention, rotomoulded articles having an inner foamed polyethylene layer and an outer normal polyethylene layer can be prepared. The large elastic viscosity component G' of the polyethylene prepared with a tetrahydro-indenyl catalyst is responsible for the better dispersion of bubbles into the foamed material.

The polyethylene resins of the present invention can also be cross-linked by any cross-linking agent known in the field prior to being rotomoulded.

The polyethylene polymerized with a bis-indenyl metallocene catalyst according to the present invention can be used to produce rotomoulded articles in a variety of applications such as for example tanks, containers, toys, boats, furniture, medical applications, buried tanks, sceptic tanks, fuel tanks.

**Examples.**

Several high density polyethylene resins have been tested and compared in roto moulding applications.

Resin R1 is a polyethylene resin prepared with a metallocene catalyst and sold by Borealis under the name Borocene® RM8343.

Resins R2, R5 and R6 have been prepared with ethylene bis(4,5,6,7-tetrahydro-1-indenyl) zirconium dichloride.

Resin R3 is a commercial Ziegler-Natta resin sold by BP under the name Rigidex® 3560

Resins R7 and R8 were prepared with di(n-butyl-cyclopentadieny) zirconium dichloride: they are similar to the HDPE resins produced by Borealis and Exxon.

The resins' properties are summarised in Table I.

TABLE I

| Resin | $\eta_0$ (Pa.s) | $\lambda$(s) | catalyst | DRI @ 190°C | MI2 (g/10 min) | Density (g/cm$^3$) | MWD |
|---|---|---|---|---|---|---|---|
| R1 | 1045 | 0.0040 | - | 0.04 | 6 | 0.934 | 2.1 |
| R2 | 3394.39 | 0.3701 | THI | 3.88 | 4.2 | 0.939 | 2.9 |
| R3 | 1357.83 | 0.0174 | ZN | 0.37 | 6.38 | 0.936 | 4.0 |
| R5 | 1518.88 | 0.0455 | THI | 0.99 | 7.04 | 0.936 | 2.5 |
| R6 | 1227.78 | 0.0247 | THI | 0.63 | 7.9 | 0.937 | 2.3 |
| R7 | 1106.25 | 0.0042 | n-butyl | 0.04 | 6.24 | 0.936 | 2.2 |
| R8 | 238.04 | 0.0042 | n-butyl | 0.04 | 5.3 | 0.936 | 2.1 |

Wherein $\eta_0$ is the zero-shear viscosity and $\lambda$ is the relaxation time

As can be seen from Table 1, the main difference between resins R1, R7 and R8 on the one hand and resins R2, R5 and R6 on the other hand lies in the values for the Dow Rheological index (DRI), said values being extremely low for the resins prepared with the n-butyl catalyst. It must be noted that for resin R3 prepared with a Ziegler-Natta catalyst the DRI value is influenced by the molecular weight distribution that is broader than that of a resin prepared with a metallocene catalyst.

The elastic component of the various resins is displayed in Figure 1 that represents the viscous modulus G" expressed in Pa graphed as a function of the elastic modulus G' expressed in Pa. It can be deduced from that gragh that resins R2 and R3 prepared respectively with a tetrahydro-indenyl catalyst and with a Ziegler-Natta catalyst have the largest elastic component, resin R6, prepared with a tetrahydro-indenyl catalyst has an intermediate elastic component and resin R7 prepared with the n-butyl catalyst has the lowest elastic component. R2 presents a higher elastic component G' than R6 because it has a higher molecular weight than R6.

Figure 2 represents the elastic component G' expressed in Pa as a function of shear rate expressed in s-1. It is observed on that graph that resin R7 prepared with a n-butyl metallocene catalyst has the lowest elastic component which is favourable to sintering. These rotomoulded articles prepared from these resins however suffer from high shrinkage and warpage. Resin R3, prepared with a Ziegler-Natta catalyst has a higher elastic component than R7, thus less favourable for sintering. Resin R6 prepared according to the present invention has an intermediate position between resins R7 and R3 and offers the advantage of very small shrinkage and warpage.

A first set of rotational moulding trials were carried out on the polyethylene powders, R2, R3, R6 and R7 micronised on the WEDCO® machine. Each grade polymer was exposed to three peak internal air temperatures (PIAT) that were respectively of 180, 190 and 210 °C. The PIAT is defined as the maximum temperature that the mould reached within the oven before it was removed to the cooling bay of the rotational moulding machine. In all cases, the parts were moulded using an oven set temperature of 300 °C. The ROTOLOG® temperature measuring system was used to record the temperature profiles of the internal air, material, and mould as well as that of the oven. The system consists of an insulated radio transmitter, which is attached to the mould and travels with it in the oven and in the cooler bay.

The transmitter sends a signal to a receiver, which in turn is connected to a computer that uses the ROTOLOG® software to graph real-time temperature/time data.

All test mouldings were carried out on the CACCIA 1400R rotational moulding machine having the following specifications:

- Shuttle-style machine
- Offset arm
- LPG burner arm
- Burner capacity of 7700 Kcal/hr
- Air fan cooling
- Maximum plate diameter of 950 mm.

The mould used to produce the test mouldings was an aluminium cube mould of base 300 mm x 300 mm with a central vent port and with a draft angle of 3° included to facilitate demoulding. The shot weight was set at 1.8 kg to produce 3 mm thick mouldings. The mould was removed from the oven at peak internal temperatures of 180 °C, 190 °C and 210 °C. The cooling medium for all the materials was forced air and the moulding conditions for the trials were as follows:

- oven temperatue: 300 °C
- rotation ratio: ~4:1
- cooling medium: forced air
- preheated arm and mould
- rotolog unit n° 5 and rotolog software version 2.7

The total cycle times for the mouldings are shown in Table II. All cycle times are taken from the same start point of 50 °C and a demoulding temperature of 79 °C to allow for easier comparison.

TABLE II

| **Overall cycle time in minutes** | | | |
|---|---|---|---|
| Material | PIAT of 180 °C | PIAT of 190 °C | PIAT of 210 °C |
| R2 | 33.05 | 33.47 | 36.27 |
| R3 | 29.5 | 30.52 | 37.3 |
| R6 | 30.93 | 32.99 | 38.3 |
| R7 | 39.2 | 39.4 | 43.1 |

It can be seen from Table II that for all samples tested the overall cycle time increases with increasing PIAT.
Shrinkage and warpage were measured on all samples as follows.
Mould shrinkage factors are measured by recording how much a moulded article dimension reduces after the moulding has cooled. The reduced dimension is related to a reference dimension taken from the actual mould. In the case of the box mould used in the present invention, the mould had a grid machined into the bottom of its cavity. The distance selected as the reference value was the hypothenuse distance of the grid at the bottom of the mould: it was measured to be 169.9 mm. The distance between the same two reference points was recorded on the cooled moulding and the percentage of shrinkage was then determined. The measuring apparatus consisted of a milling machine bed upon which the moulded article was placed. An electronic microscope was fixed onto movable axes positioned above the milling bed. Any movements of the axes, and subsequently of the microscope, were measured on an electronic meter so that the X and Y coordinates of movement could be obtained. Once the moulded article was positioned properly on the milling bed, the X and Y distances of the grid reproduced on the moulding could be measured and the diagonal distance between the selected grid points could be calculated and compared to the reference value of 169.9 mm, thereby allowing to calculate the percentage of shrinkage. The results are displayed in Table III

TABLE III

| **Shrinkage in %** | | | |
|---|---|---|---|
| Material | PIAT of 180 °C | PIAT of 190 °C | PIAT of 210 °C |
| R2 | 2.55 | 2.39 | 2.65 |
| R3 | 2.43 | 2.67 | 2.83 |
| R6 | 2.24 | 2.16 | 2.29 |
| R7 | 3.28 | 3.12 | 3.07 |

The best results have been obtained with resin R6.
The amount of warpage on a moulded article was measured by using a dial gauge in conjonction with the apparatus described here-above for measuring the shrinkage. The dial gauge pointer was placed above the centre of the grid and the milling machine bed was raised vertically so that a datum value could be set on the gauge. The milling bed was then moved so that the dial gauge sat on a point of the grid and a reading was made of how much the pointer rose or fell with respect to the datum value. This was repeated for all the points on the grid and the maximum warpage was defined as the largest deviation from the datum. The results for warpage are displayed in Table IV.

TABLE IV

| Maximum warpage in mm | | | |
|---|---|---|---|
| Material | PIAT of 180 °C | PIAT of 190 °C | PIAT of 210 °C |
| R2 | 1.9 | 2.0 | 1.52 |
| R3 | 2.45 | 3.25 | 1.72 |
| R6 | 2.24 | 1.55 | 2.12 |
| R7 | 3.28 | 2.6 | 2.95 |

It can be seen from the results displayed in Tables III and IV that the resin prepared with the n-butyl catalyst exhibited the largest values for both shrinkage and warpage.

Impact measurements were carried out following the method of standard test ASTM 5420 both at room temperature and at a temperature of -40 °C. The test results were obtained on an average of at least 5 samples.

Modes of failure during impact testing fall into two categories: brittle and ductile. With brittle failure, a crack initiates and propagates prior to any bulk yielding of the specimen and hence the point of failure lies on the initial rising portion of the load/deformation curve. In the case of ductile failure, considerable yielding takes place and the failure occurs well after the maximum on the load/deformation curve. As the area under the load/deformation curve is a measure of the fracture energy, it follows that brittle failure is associated with very low absorbed energy as compared to ductile failure.

The samples used for impact tests were all taken from the same side of each trial moulding so that the results were made comparable to the moulding conditions. They were cut with a bandsaw into squares of 60 mm x 60 mm, the edges were cleaned of burrs and the thickness at the centre of each sample was noted. The machine used was the CEAST Fractovis and depending upon the thickness and the expected strength of the sample under test, the sensitivity and the working range of the load cell were appropriately set up to sense the sample failure.

The impact results were recorded both at room temperature and at - 40 °C for resins R2, R3, R6 and R7 and respectively for the peak internal air temperatures of 180, 190 and 210 °C. The results are displayed in Table V. They are expressed in J/mm.

TABLE V

| Resin | PIAT of 180 °C | | PIAT of 190 °C | | PIAT of 210 °C | |
|---|---|---|---|---|---|---|
| | T= -40 °C | Room T | T= -40 °C | Room T | T= -40 °C | Room T |
| R2 | 8.84 ductile | 7.71 ductile | 8.52 ductile/brittle | 6.99 ductile | 8.57 ductile | 7.32 ductilt |
| R3 | 8.83 ductile | 7.08 ductile | 6.58 ductile/brittle | 5.5 ductile | 10.3 ductile/brittle | 7.69 ductile |
| R6 | 8.09 brittle | 7.01 ductile | 7.2 brittle | 7.29 ductile | 7.02 brittle | 7.12 ductile |
| R7 | 9.98 brittle | 8.34 ductile | 10.36 ductile | 7.82 ductile | 10.25 ductile | 8.56 ductile |

As can be observed, all the samples exhibited a ductile failure at room temperature. It is also observed that the cold temperature (-40 °C) impact values are higher than the room temperature impact values.

Stacking tests with nitric acid have also been performed on resins R2, R3 and R6. The measurements were carried out following the method of ADR Standard - Appendix A.5. The load applied had a density of 1.4 g/cm$^3$ and the containers were hollow 30 litres items of 1.8 kg. The times to failure were respectively of 35 days for comparative ZN resin R3 and of 150 days for resins R2 and R6 according to the present invention.

**Claims**

1. Rotomoulded articles consisting essentially of polyethylene resin polymerised with a bis-indenyl metallocene catalyst.

2. The rotomoulded articles of claim 1 wherein the polyethylene resin has a density of from 0.915 to 0.950 g/cm$^3$ and a melt index of from 2.0 to 20.0 g/10 min.

3. The rotomoulded articles of claim 2 wherein the polyethylene resin has a density of from 0.925 to 0.945 g/cm$^3$ and a melt index of from 2.0 to 10.0 g/10 min.

4. The rotomoulded articles of any one of the preceding claims wherein the metallocene catalyst is a tetrahydro-indenyl catalyst.

5. The rotomoulded articles of any one of the preceding claims wherein the tetrahydro-indenyl metallocene catalyst is ethylene bis(4,5,6,7-tetrahydro-1 -indenyl)zirconium dichloride.

6. Use of a polyethylene resin polymerised with a bis-indenyl metallocene catalyst to produce rotomoulded articles having a reduced warpage.

7. Use of a polyethylene resin polymerised with a bis-indenyl metallocene catalyst to produce rotomoulded articles having a reduced shrinkage.

8. Use of a polyethylene resin polymerised with a bis-indenyl metallocene catalyst to produce rotomoulded articles having improved resistance to degradation from nitric acid.

9. Use of a polyethylene resin polymerised with a bis-indenyl metallocene catalyst to produce foamed rotomoulded articles having a better dispersion of bubbles.

10. Use according to any one of claims 6 to 9 wherein the bis-indenyl catlyst is a tetrahydro-indenyl catalyst.

FIGURE 1.

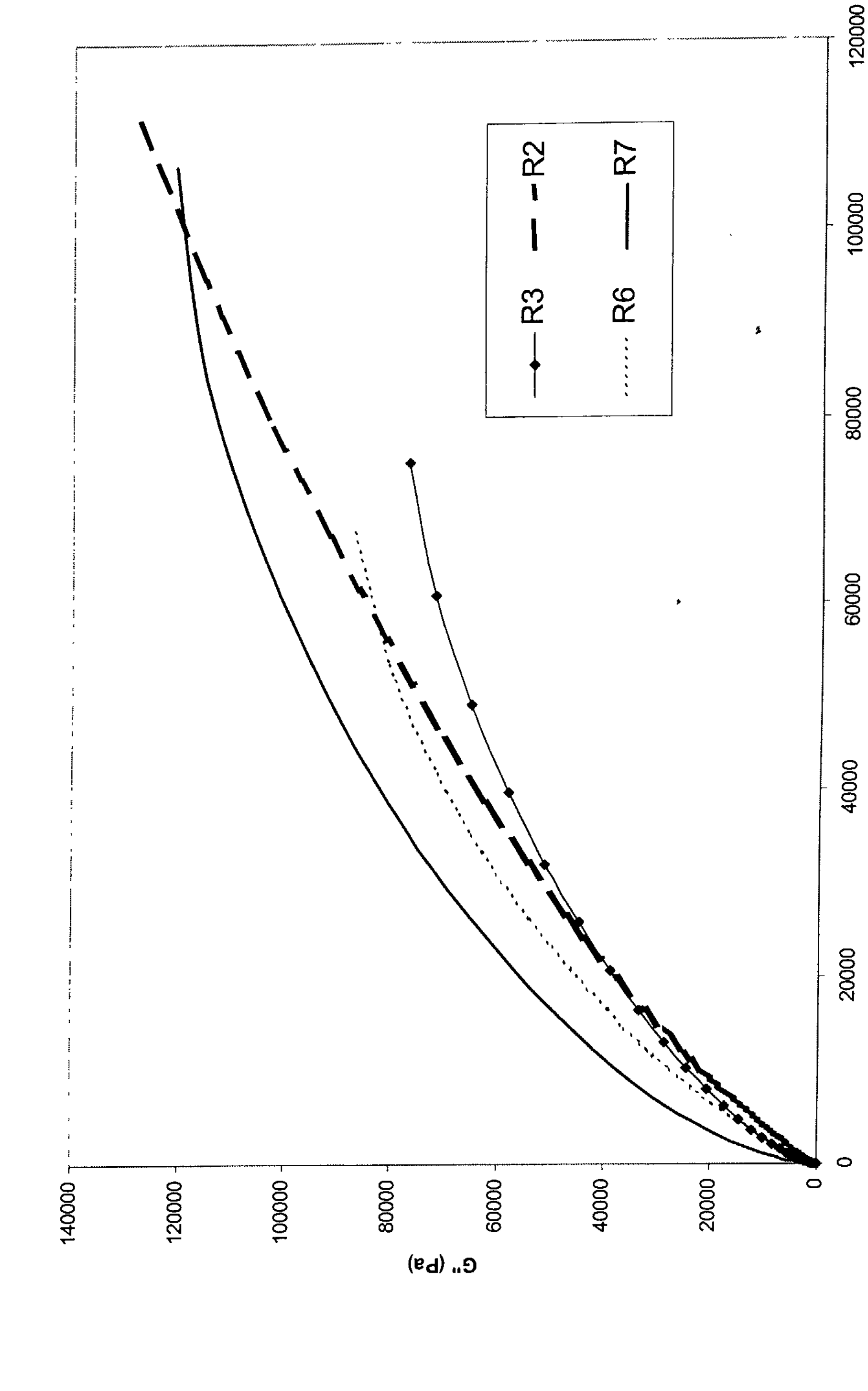
R3
R2
R6
R7
G' (Pa)
G'' (Pa)
0
20000
40000
60000
80000
100000
120000
140000

FIGURE 2.

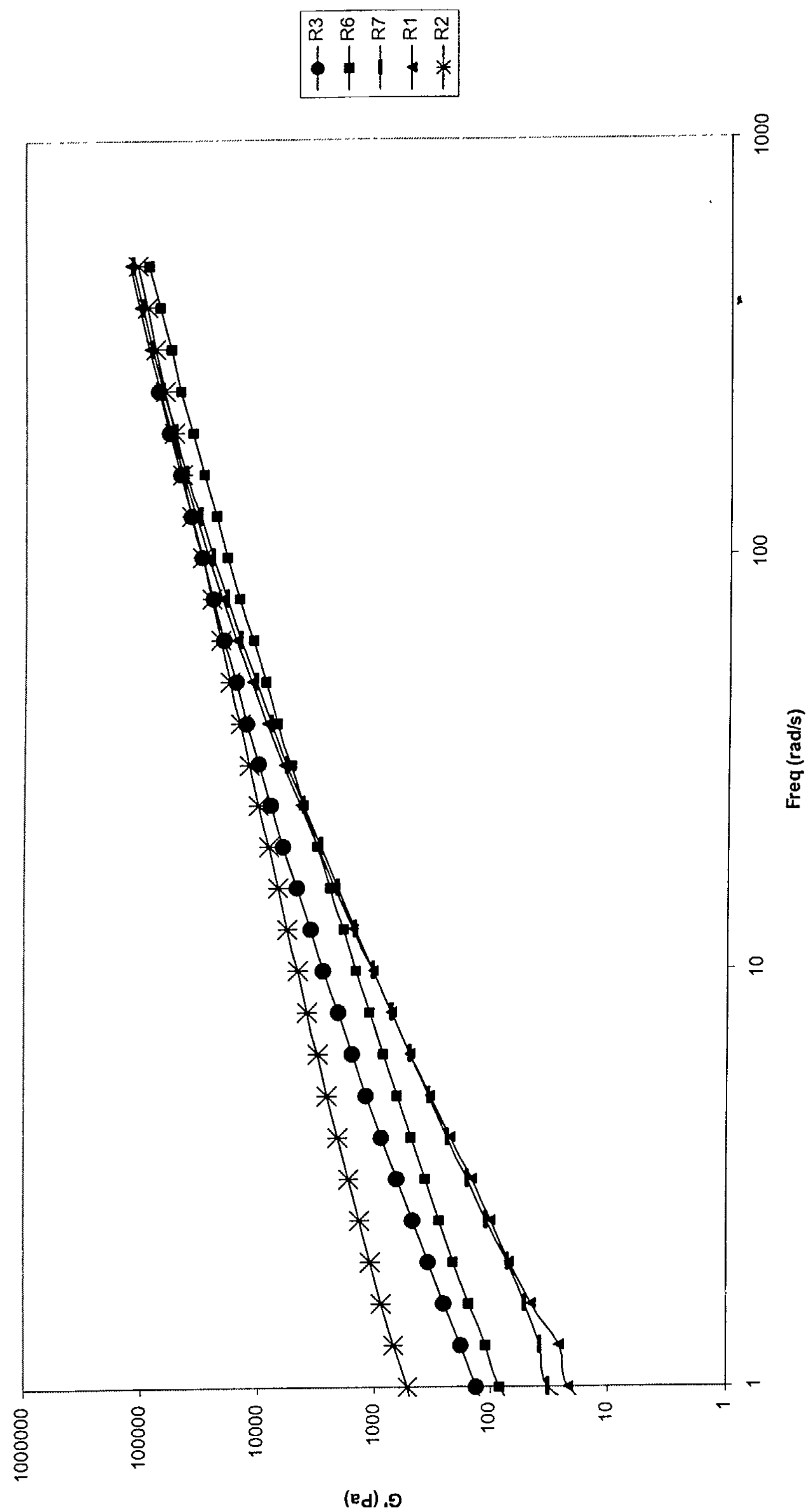
R3
R6
R7
R1
R2
1000000
100000
10000
1000
100
10
1
G' (Pa)
1
10
100
1000
Freq (rad/s)

European Patent Office

# EUROPEAN SEARCH REPORT

Application Number
EP 02 07 6658

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | AU 21280 99 A (J R COURTENAY NZ LIMITED) 30 September 1999 (1999-09-30) * the whole document * --- | 1-10 | C08F10/02 |
| A | US 6 362 270 B1 (NIETO JESUS ET AL) 26 March 2002 (2002-03-26) * the whole document * --- | 1-10 | |
| A | WO 96 35729 A (FINA RESEARCH ;RAZAVI ABBAS (BE); DEBRAS GUY (BE)) 14 November 1996 (1996-11-14) * the whole document * --- | 1-10 | |
| E | EP 1 236 770 A (BOREALIS TECH OY) 4 September 2002 (2002-09-04) * the whole document * ----- | 1-10 | |

TECHNICAL FIELDS SEARCHED (Int.Cl.7)
C08F

The present search report has been drawn up for all claims

| Place of search | Date of completion of the search | Examiner |
|---|---|---|
| MUNICH | 2 October 2002 | Balmer, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 02 07 6658

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2002

| Patent document cited in search report | | Publication date | Patent family member(s) | | | Publication date |
|---|---|---|---|---|---|---|
| AU 2128099 | A | 30-09-1999 | NONE | | | |
| US 6362270 | B1 | 26-03-2002 | AU | 6640100 | A | 13-03-2001 |
| | | | EP | 1226211 | A1 | 31-07-2002 |
| | | | US | 2002077401 | A1 | 20-06-2002 |
| | | | WO | 0112714 | A1 | 22-02-2001 |
| WO 9635729 | A | 14-11-1996 | AT | 200496 | T | 15-04-2001 |
| | | | DE | 69612494 | D1 | 17-05-2001 |
| | | | DE | 69612494 | T2 | 27-09-2001 |
| | | | DK | 830395 | T3 | 06-08-2001 |
| | | | WO | 9635729 | A1 | 14-11-1996 |
| | | | EP | 0830395 | A1 | 25-03-1998 |
| | | | ES | 2157445 | T3 | 16-08-2001 |
| | | | JP | 11504970 | T | 11-05-1999 |
| | | | PT | 830395 | T | 30-10-2001 |
| EP 1236770 | A | 04-09-2002 | EP | 1236770 | A1 | 04-09-2002 |
| | | | WO | 02070602 | A2 | 12-09-2002 |

EPO FORM P0459

For more details about this annex : see Official Journal of the European Patent Office, No. 12/82